# FASCICULE DE BREVET EUROPEEN

(11) **EP 1 490 162 B1**
(45) Date de publication et mention de la délivrance du brevet: **01.10.2014**
(21) Numéro de dépôt: 03738182.9
(22) Date de dépôt: 21.03.2003
(51) Int. Cl.: B01D 65/00, B01D 63/06, F16L 21/00

(54) **DISPOSITIF DE RACCORDEMENT ENTRE UNE TUBULURE ET UN CARTER DE FILTRATION**
VERBINDERVORRICHTUNG ZWISCHEN EINEM ROHR UND EINEM FILTERGEHÄUSE
CONNECTOR DEVICE BETWEEN A PIPE AND A FILTER HOUSING

(30) Priorité: 02.04.2002 FR 0204084
(43) Date de publication de la demande: 29.12.2004
(73) Titulaire: Technologies Avancées & Membranes Industrielles, 26110 Nyons (FR)
(72) Inventeur: LESCOCHE, Philippe, F-84110 Faucon (FR)
(74) Mandataire: Thibault, Jean-Marc
(86) Numéro de dépôt international: PCT/FR2003/000900
(87) Numéro de publication internationale: WO 2003/082448

(56) Documents cités:
- EP-A- 1 078 679
- DE-A- 2 819 254
- DE-A- 3 842 436
- PATENT ABSTRACTS OF JAPAN vol. 2000, no. 22, 9 mars 2001 (2001-03-09) & JP 2001 137671 A (TORAY IND INC), 22 mai 2001 (2001-05-22)
- PATENT ABSTRACTS OF JAPAN vol. 1997, no. 04, 30 avril 1997 (1997-04-30) & JP 08 326969 A (COSMO KOKI CO LTD;SUPER RESIN KOGYO KK), 10 décembre 1996 (1996-12-10)
- PATENT ABSTRACTS OF JAPAN vol. 2002, no. 06, 4 juin 2002 (2002-06-04) & JP 2002 054425 A (HINO MOTORS LTD), 20 février 2002 (2002-02-20)

## Description

La présente invention concerne le domaine technique de la séparation moléculaires ou particulaires mettant en oeuvre des éléments de séparation appelés généralement membranes, adaptés pour assurer la séparation des molécules ou des particules contenues dans un milieu fluide à traiter.

L'objet de l'invention trouve une application particulièrement avantageuse dans le domaine de la filtration au sens général d'un milieu fluide à traiter, et en particulier de la nanofiltration, de l'ultrafiltration, de la microfiltration, etc..

D'une manière classique, une installation de filtration comporte un circuit de circulation du fluide à traiter, constitué par des conduites, des canalisations ou d'une manière générale, des tubulures, dans lequel est inséré au moins un carter de filtration comportant une enveloppe métallique à l'intérieur de laquelle sont disposés des éléments tubulaires de filtration s'étendant parallèlement les uns aux autres. Chaque élément de filtration comporte au moins un canal de circulation pour le fluide à traiter. Les éléments de filtration assurent la filtration tangentielle du fluide à traiter en vue d'obtenir à la surface périphérique des éléments de filtration, la sortie du filtrat destiné à être récupéré dans une chambre de collecte aménagée à l'extérieur du carter.

D'une manière traditionnelle, le carter de filtration est relié, à chacune de ses extrémités, à une tubulure par l'intermédiaire d'un système de raccordement dont le type dépend de l'application.

Il est ainsi connu un premier type de système de raccordement dit à clamp notamment très utilisé dans l'industrie alimentaire. Un tel système comprend :
- une contre-bride du type à clamp, munie d'un cône de serrage et montée sur la tubulure à raccorder,
- une contre-plaque du type à clamp pourvue également d'un cône de serrage et montée sur le carter de filtration,
- un joint d'étanchéité interposé entre lesdites contre-bride et contre-plaque,
- et des moyens de serrage du type à clamp constitués par un collier venant s'emboîter sur les cônes de serrage de la contre-bride et de la contre-plaque pour assurer l'écrasement du joint d'étanchéité et par suite, l'étanchéité entre la tubulure et le carter de filtration.

Il est également connu un deuxième type de système de raccordement dit à griffes utilisé notamment dans l'industrie agroalimentaire, présentant un coût moins onéreux que le système de raccordement du type à clamp car ne nécessitant pas notamment la réalisation de cônes de serrage.

Un tel système de raccordement à griffes comporte :
- une contre-bride du type à griffes pourvue d'une rainure périphérique et équipant la tubulure à raccorder,
- une contre-plaque du type à griffes pourvue également d'une rainure périphérique et montée sur le carter de filtration,
- un organe d'étanchéité interposé entre ladite contre-bride et ladite contre-plaque,
- et des moyens de serrage du type à griffes réparties autour desdites contre-bride et contre-plaque pour assurer le pincement de l'organe d'étanchéité.

Il est également connu un troisième type de système de raccordement dit à bride, utilisé en particulier dans le domaine de la chimie. Un tel système de raccordement comporte :
- une contre-bride du type à bride montée sur la tubulure à équiper,
- une contre-plaque du type à bride montée sur le carter de filtration,
- un joint plat d'étanchéité interposé entre ladite contre-bride et ladite contre-plaque,
- et des moyens de serrage du type bride constitués par des boulons-écrous agissant entre les contre-bride et contre-plaque pour assurer l'écrasement du joint et par suite, l'étanchéité.

Il doit être constaté qu'il convient de disposer d'autant de types de carters que de types de systèmes de raccordement. Le déposant a exprimé le besoin de pouvoir disposer d'un carter de filtration à caractère universel qui puisse être réalisé de façon indépendante par rapport au système de raccordement utilisé.

Dans l'état de l'art antérieur, la définition d'un adaptateur est connu par : http://fr.wikipedia.org/wiki/Adapteur. Par ailleurs, les documents FR 2 475 118, US 6 355 169, US 3 066 803, US 3 743 096, US 4 552 662, EP 0 294 837, JP 1104908, US 5 006237 et US 5762671 (D2 à D10) décrivent des raccords pour filtres de véhicules à moteur.

La présente invention vise donc à satisfaire ce besoin en proposant un dispositif permettant de relier une tubulure à un carter de filtration, à l'aide des différents types de systèmes de raccordement connus, en mettant en oeuvre un carter de filtration dit universel pouvant être raccordé à une tubulure à l'aide de différents types de systèmes de raccordement.

L'objet de l'invention vise donc à atteindre un tel objectif et concerne une installation conforme à la revendication 1.

Selon une première variante de réalisation, la contre plaque d'un type donné fait partie d'un système de raccordement de type à clamp.

Selon une deuxième variante de réalisation, la contre-plaque d'un type donné fait partie d'un système de raccordement de type à griffes.

Selon une troisième variante de réalisation, la contre-plaque d'un type donné fait partie d'un système de raccordement de type à bride.

Diverses autres formes de réalisation ressortent de la description faite ci-dessous en référence aux dessins annexés qui montrent, à titre d'exemples non limitatifs, des formes de réalisation et de mise en oeuvre de l'objet de l'invention.

La **figure 1** est une vue éclatée d'un dispositif de liaison conforme à l'invention mettant en oeuvre un système de raccordement de type à clamp.

La **figure 2** est une vue éclatée d'un dispositif de liaison conforme à l'invention mettant en oeuvre un système de raccordement du type à griffes.

La **figure 3** est une vue éclatée d'un dispositif de liaison conforme à l'invention mettant en oeuvre un système de raccordement de type à bride.

La **figure 4** est une vue de face d'une plaque de tête conforme à l'invention.

L'objet de l'invention concerne un dispositif 1 pour relier à l'aide de systèmes de raccordement **Rᵢ** de divers types, une canalisation, une conduite ou d'une manière générale, une tubulure **2** faisant partie d'une installation de filtration, à un système de filtration communément appelé carter de filtration 3. D'une manière classique, le carter de filtration 3 est constitué d'une enveloppe métallique 4 généralement tubulaire à l'intérieur de laquelle sont montés des éléments de filtration de forme générale tubulaire non représentés mais connus en soi.

La description qui suit fait état de trois types de systèmes de raccordement **Rᵢ,** à savoir **R₁, R₂, R₃,** mais il est clair que l'objet de l'invention peut être mis en oeuvre pour d'autres types de systèmes de raccordement. Il est à noter que par souci de clarté, tous les éléments constitutifs d'un système de raccordement **Rᵢ** seront affectés de l'indice i.

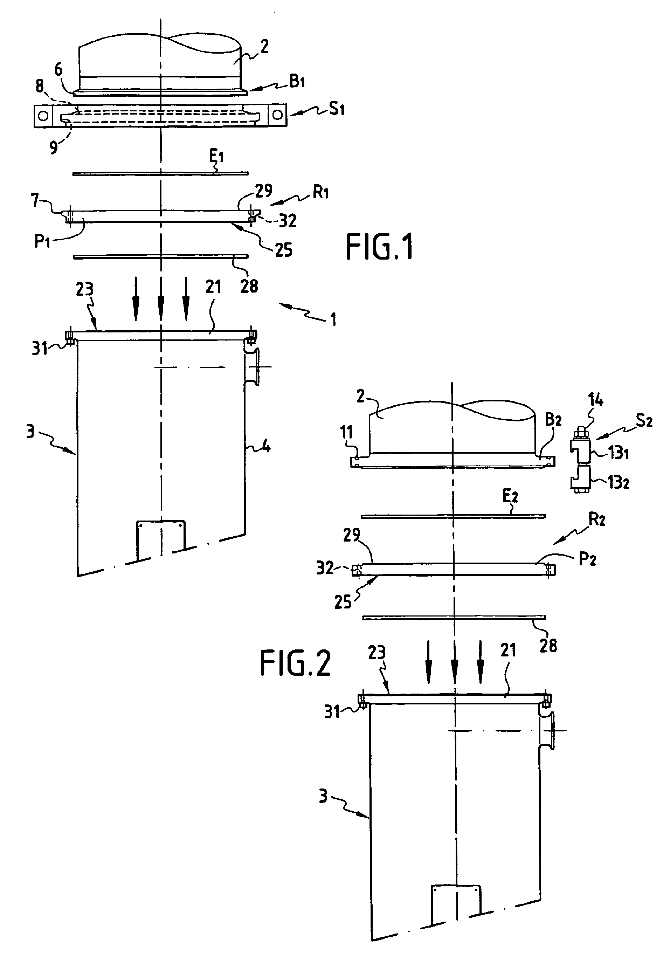

La **fig. 1** illustre un premier système de raccordement **R₁** du type à clamp. Un tel système **R₁** comporte une contre-bride **B₁** du type à clamp équipant la tubulure 2. Cette contre-bride **B₁** de type à clamp est pourvue d'un cône de serrage 6 dont la fonction apparaîtra plus précisément dans la suite de la description. Le système de raccordement de type à clamp **R₁** comporte également une contre-plaque **P₁** de type à clamp destinée à être raccordée au carter de filtration 3. Cette contre-plaque **P₁** de type à clamp se trouve pourvue d'un cône de serrage 7 dont la fonction apparaîtra plus précisément dans la suite de la description.

Un organe d'étanchéité **E₁** tel qu'un joint clamp est interposé entre ladite contre-plaque **P₁** et ladite contre-bride **B₁.** Le système de raccordement de type à clamp **R₁** comporte également des moyens de serrage Si de type à clamp agissant entre la contre-bride **B₁** et la contre-plaque **P₁** pour assurer l'étanchéité entres-elles. Ces moyens de serrage **S₁** sont constitués par un collier de serrage aménagé pour comporter des logements **8, 9** complémentaires respectivement aux cônes **6, 7** de manière que le joint **E₁** interposé entre les faces transversales de la contre-bride **B₁** et de la contre-plaque **P₁** se déforme pour assurer l'étanchéité entres-elles.

La **fig. 2** illustre un deuxième système de raccordement **R₂** de type à griffes. Un tel système de raccordement à griffes **R₂** comporte une contre-bride **B₂** du type à griffes équipant la tubulure 2. Cette contre-bride **B₂** de type à griffes est pourvue d'une rainure périphérique 11 dont la fonction apparaîtra plus précisément dans la suite de la description. Le système de raccordement du type à griffes **R₂** comporte également une contre-plaque **P₂** de type à griffes destinée à être raccordée au carter de filtration **3.**

Un organe d'étanchéité **E₂** tel qu'un joint clamp est interposé entre ladite contre-plaque **P₂** et ladite contre-bride **B₂.** Le système de raccordement **R₂** comporte également des moyens de serrage du type à griffes **S₂** agissant entre ladite contre-bride **B₂** et ladite contre-plaque **P₂** pour assurer l'étanchéité entres-elles. Ces moyens de serrage **S₂** sont constitués par une série de griffes de serrage constituées chacune par deux mors **13₁, 13₂** mus en déplacement relatif par l'intermédiaire d'une vis 14. L'un des mors d'une griffe de serrage est engagé dans la rainure **11** de la contre-bride **B₂** tandis que l'autre mors agit sur la contre-plaque **P₂.**

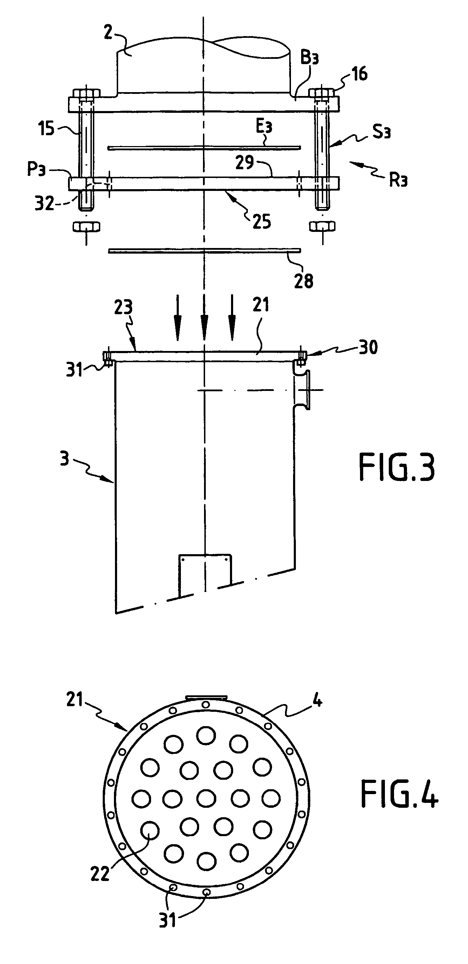

La **fig.** 3 illustre un troisième système de raccordement **R₃** du type à brides. Un tel système de raccordement **R₃** comporte une contre-bride **B₃** du type à brides équipant la tubulure 2. Un tel système de raccordement **R₃** comporte également une contre-plaque **P₃** de type à brides destinée à être raccordée au carter de filtration 3. Un organe d'étanchéité **E₃** tel qu'un joint plat est interposé entre ladite contre-plaque **P₃** et ladite contre-bride **B₃.**

Le système de raccordement du type à brides **R₃** comporte également des moyens de serrage **S₃** de type à brides agissant entre ladite contre-bride **B₃** et la dite contre-plaque **P₃** pour assurer l'étanchéité entres-elles. Ces moyens de serrage **S₃** sont constitués par exemple par une série de boulons **15** engagés dans des trous aménagés à la périphérie de la contre-plaque **P₃** et de la contre-bride **B₃** pour coopérer avec des écrous **16.**

Les différents systèmes de raccordement **Rᵢ,** à savoir **R₁, R₂, R₃,** dans les exemples donnés ci-dessus ne sont pas décrits plus précisément dans la mesure où ils sont bien connus dans l'état de l'art.

Conformément à l'invention, le dispositif de liaison 1 est adapté pour relier une tubulure **2** au carter **3** à l'aide de l'un ou l'autre des systèmes de raccordement **Rᵢ.** En d'autres termes, le carter de filtration **3** selon l'invention peut être relié de manière indifférente par l'un ou l'autre des systèmes de raccordement **Rᵢ** à une tubulure **2.** A cet effet, le carter de filtration 3 est pourvu d'une plaque de tête **21** indépendante du type du système de raccordement **Rᵢ.** Dans le cas où le carter de filtration 3 est destiné à être relié à chacune de ses extrémités à une tubulure **2,** chaque extrémité du carter de filtration **3** est muni d'une plaque de tête **21.**

Tel que cela ressort précisément de la **fig. 4****,** chaque plaque de tête **21** est munie de passages **22** de réception chacun d'une extrémité d'un élément tubulaire de filtration. Dans l'exemple illustré, les passages de réception **22** possèdent chacun une section droite transversale circulaire et sont destinés à recevoir chacun un joint d'étanchéité. Chaque passage de réception **22** traverse la plaque de tête **21** pour s'ouvrir ainsi sur une face d'appui **23** de la plaque de tête **21.** Cette face d'appui **23** s'étend donc du côté extérieur par rapport au carter de filtration **3.**

Selon une caractéristique de l'invention, chaque contre-plaque **Pᵢ** présente une première face d'appui **25** complémentaire à la face d'appui **23** de la plaque de tête **21** de manière que l'interposition d'un joint d'étanchéité **28** entre-elles puisse permettre d'obtenir une étanchéité entre la plaque de tête **21** et une contre-plaque **Pᵢ.** En d'autres termes, les faces d'appui **23, 25** sont complémentaires dans le sens où leur coopération par l'intermédiaire d'un joint d'étanchéité permet d'obtenir un montage étanche. Chaque contre-plaque **Pᵢ** comporte aussi une deuxième face d'appui **29** opposée à la première et adaptée pour coopérer avec la contre-bride **Bᵢ** du type correspondant. En d'autres termes, cette deuxième face d'appui **29** possède les caractéristiques connues pour s'adapter à la contre-bride **Bᵢ** correspondante et permettant d'obtenir une étanchéité. Bien entendu, chaque contre-plaque **Pᵢ** d'un type donné comporte, par exemple, une série de trous non représentés aménagés chacun en coïncidence avec les passages de réception **22** des extrémités des éléments tubulaires de filtration de manière à permettre le passage du fluide à traiter.

Le dispositif de liaison **1** selon l'invention comporte également des moyens de liaison démontable **30** entre la plaque de tête **21** et chaque contre-plaque **Pᵢ** pour assurer l'étanchéité entres-elles et le montage/démontage de chaque contre-plaque **Pᵢ** sur la plaque de tête **21.** Ces moyens de liaison démontable **30** sont constitués par des vis, des brides, des griffes ou analogues coopérant avec la plaque de tête **21** et chaque contre-plaque **Pᵢ.** Dans l'exemple illustré, les moyens de liaison démontable **30** sont constitués par des vis **31** répartis à la périphérie de la plaque de tête **21** et destinés à être vissés dans des trous taraudés **32** aménagés sur chaque contre-plaque **Pᵢ.**

Il doit donc être compris que le carter de filtration 3 selon l'invention, peut être équipé de manière indifférente par l'un ou l'autre des systèmes de raccordement **Rᵢ** connu. La contre-plaque **Pᵢ** de chaque système de raccordement **Rᵢ** est apte à être montée sur la plaque de tête **21** du carter de filtration **3** par l'intermédiaire des moyens de liaison démontable **30.**

Selon une caractéristique préférée de réalisation, les moyens de serrage **S₁** du type à clamp sont constitués par un collier de serrage asymétrique permettant de relier une tubulure **2** d'un diamètre différent du diamètre du carter de filtration **3.** A cet effet, les cônes de serrage **6, 7** et par suite, les logements **8, 9** du collier possèdent des diamètres différents comme cela ressort clairement de la **fig.** 1.

## Revendications

1. Installation de filtration comportant une tubulure **(2)** reliée à l'aide d'un système de raccordement **(Rᵢ)** de divers types, à un carter de filtration **(3)** comportant une série d'éléments tubulaires de filtration, chaque système de raccordement **(Rᵢ)** d'un type donné comportant :
- une contre-bride **(Bᵢ)** dudit type équipant la tubulure **(2),**
- une contre-plaque **(Pᵢ)** dudit type raccordée au carter de filtration,
- un organe d'étanchéité **(Eᵢ)** interposé entre lesdites contre-bride **(Bᵢ)** et contre-plaque **(Pᵢ),**
- et des moyens de serrage **(Sᵢ)** dudit type, agissant entre lesdites contre-bride et contre-plaque pour assurer l'étanchéité entre-elles, **caractérisé en ce qu'**elle comporte :
- une plaque de tête **(21)** indépendante du type du système de raccordement **(Rᵢ)** fixée sur le carter **(3)** et munie de passages **(22)** de réception des extrémités des éléments tubulaires de filtration, ces passages **(22)** s'ouvrant sur une face d'appui **(23)** de la plaque de tête,
- pour chaque contre-plaque **(Pᵢ)** de type donné, une première face d'appui **(25)** complémentaire à celle **(23)** de la plaque de tête **(21)** et une deuxième face d'appui **(29)** adaptée pour coopérer avec la contre-bride **(Bᵢ)** du type correspondant, chaque contre-plaque (**Pᵢ**) d'un type donné comportant une série de trous aménagés chacun en coïncidence avec les passages de réception (**22**) des extrémités des éléments tubulaires de
filtration.
- un joint d'étanchéité **(28)** interposé entre la première face d'appui **(25)** d'une contre-plaque **(Pᵢ)** d'un type donné et la plaque de tête **(21),**
- et des moyens **(30)** de liaison démontable entre la plaque de tête **(21)** et chaque contre-plaque **(Pᵢ)** d'une type donné pour assurer l'étanchéité entre-elles et le montage/démontage de chaque contre-plaque **(Pᵢ)** d'un type donné sur la plaque de tête **(21).**

2. Installation selon la revendication 1, **caractérisée en ce qu'**une contre-plaque **(Pᵢ)** d'un type donné fait partie d'un système de raccordement **(R₁)** de type à clamp.

3. Installation selon la revendication 1, **caractérisée en ce qu'**une contre-plaque **(P₂)** d'un type donné fait partie d'un système de raccordement **(R₂)** de type à griffes.

4. Installation selon la revendication 1, **caractérisée en ce qu'**une contre-plaque **(P₃)** d'un type donné fait partie d'un système de raccordement **(R₃)** type à bride.

5. - Installation selon la revendication 1, **caractérisée en ce que** les moyens de liaison démontable **(30)** sont constitués par des vis, brides, griffes ou analogues coopérant avec la plaque de tête **(21)** et chaque contre-plaque **(Pᵢ)** d'un type donné.

6. Installation selon la revendication 2, **caractérisée en ce que** la contre-plaque **(P₁)** de type à clamp coopère avec une contre-bride **(B₁)** de type à clamp par l'intermédiaire de moyens de serrage **(S₁)** constitué par un collier de serrage asymétrique permettant de relier une tubulure **(2)** d'un diamètre différent du diamètre de carter de filtration **(3).**

## Patentansprüche

1. Filteranlage, umfassend einen Stutzen (2), der mit Hilfe eines Verbindungssystems (Rᵢ) unterschiedlicher Typen mit einem Filtergehäuse (3), welches eine Reihe von röhrenförmigen Filterelementen umfasst, verbunden ist, wobei jedes Verbindungssystem (Rᵢ) eines gegebenen Typs umfasst:
- einen Gegenflansch (Bᵢ) des genannten Typs, mit dem der Stutzen (2) ausgestattet ist,
- eine Gegenplatte (Pᵢ) des genannten Typs, die mit dem Filtergehäuse verbunden ist,
- ein Dichtungsorgan (Eᵢ), das zwischen dem Gegenflansch (Bᵢ) und der Gegenplatte (Pᵢ) eingefügt ist, und
- Klemmmittel (Sᵢ) des genannten Typs, die zwischen dem Gegenflansch und der Gegenplatte wirken, um die Dichtigkeit zwischen ihnen sicherzustellen,
**dadurch gekennzeichnet, dass** sie umfasst:
- eine von dem Typ des Verbindungssystems (Rᵢ) unabhängige Kopfplatte (21), die an dem Gehäuse (3) befestigt ist und mit Durchgängen (22) zur Aufnahme der Enden der röhrenförmigen Filterelemente ausgestattet ist, wobei sich diese Durchgänge (22) an einer Anlageseite (23) der Kopfplatte öffnen,
- für jede Gegenplatte (Pᵢ) gegebenen Typs eine erste Anlageseite (25), die zu derjenigen (23) der Kopfplatte (21) ergänzend ist, und eine zweite Anlageseite (29), die dazu ausgelegt ist, mit dem Gegenflansch (Bᵢ) des entsprechenden Typs zusammenzuwirken, wobei jede Gegenplatte (Pᵢ) eines gegebenen Typs eine Reihe von Löchern umfasst, die jeweils in Übereinstimmung mit den Durchgängen zur Aufnahme (22) der Enden der röhrenförmigen Filterelemente angeordnet sind,
- eine Dichtung (28), die zwischen der ersten Anlageseite (25) einer Gegenplatte (Pᵢ) eines gegebenen Typs und der Kopfplatte (21) eingefügt ist, und
- Mittel (30) zur lösbaren Verbindung zwischen der Kopfplatte (21) und jeder Gegenplatte (Pᵢ) eines gegebenen Typs, um die Dichtigkeit zwischen ihnen sowie die Montage/Demontage einer jeden Gegenplatte (Pᵢ) eines gegebenen Typs an der Kopfplatte (21) zu gewährleisten.

2. Anlage nach Anspruch 1, **dadurch gekennzeichnet, dass** eine Gegenplatte (Pᵢ) eines gegebenen Typs zu einem Verbindungssystem (R₁) vom Typ mit Klammer gehört.

3. Anlage nach Anspruch 1, **dadurch gekennzeichnet, dass** eine Gegenplatte (P₂) eines gegebenen Typs zu einem Verbindungssystem (R₂) vom Typ mit Klauen gehört.

4. Anlage nach Anspruch 1, **dadurch gekennzeichnet, dass** eine Gegenplatte (P₃) eines gegebenen Typs zu einem Verbindungssystem (R₃) vom Typ mit Flansch gehört.

5. Anlage nach Anspruch 1, **dadurch gekennzeichnet, dass** die Mittel zur lösbaren Verbindung (30) durch Schrauben, Flansche, Klauen oder ähnliches gebildet sind, die mit der Kopfplatte (21) und jeder Gegenplatte (Pᵢ) eines gegebenen Typs zusammenwirken.

6. Anlage nach Anspruch 2, **dadurch gekennzeichnet, dass** die Gegenplatte (P₁) vom Typ mit Klammer mit einem Gegenflansch (B₁) vom Typ mit Klammer über Klemmmittel (S₁) zusammenwirkt, die durch eine asymmetrische Klemmschelle gebildet sind, die ermöglicht, einen Stutzen (2) mit einem von dem Durchmesser des Filtergehäuses (3) abweichenden Durchmesser zu verbinden.

## Claims

1. Installation for using various types of coupling system (Rᵢ) to connect a tube (2) to a filter housing (3) including a series of tubular filter elements, each coupling system (Rᵢ) of a given type comprising:
- a flange (Bᵢ) of said type flitted to the tube (2);
- a backing-plate (Pᵢ) of said type for connection to the filter housing;
- a sealing member (Eᵢ) interposed between said flange (Bᵢ) and said backing-plate (Pᵢ); and
- tightening means (Sᵢ) of said type acting between said flange and said backing-plate in order to provide sealing between them, the device being **characterized in that** it comprises:
- a head plate (21) independent of the type of coupling system (Rᵢ) fixed to the housing (3) and provided with passages (22) for receiving the ends of the tubular filter elements, these passages (22) opening out in a bearing face (23) of the head plate;
- for each backing-plate (Pᵢ) of a given type, a first bearing face (25) complementary to the bearing face (23) of the head plate (21), and a second bearing face (29) adapted to co-operate with the flange (Bᵢ) of corresponding type; that each backing-plate (Pᵢ) of a given type having a series of holes each arranged to coincide with the passages (22) receiving the ends of the tubular filter elements;
- a sealing gasket (28) interposed between the first bearing face (25) of a backing-plate (Pᵢ) of a given type and the head plate (21); and
- releasable connection means (30) between the head plate (21) and each backing-plate (Pᵢ) of a given type to provide sealing between them and to enable each backing-plate (Pᵢ) of a given type to be mounted on and removed from the head plate (21).

2. Installation according to claim 1, **characterized in that** a backing-plate (P₁) of a given type forms part of a clamp type coupling system (R₁).

3. Installation according to claim 1, **characterized in that** a backing-plate (P₂) of a given type forms part of a gripper type coupling system (R₂).

4. Installation according to claim 1, **characterized in that** a backing-plate (P₃) of a given type forms part of a flange type coupling system (R₃).

5. Installation according to claim 1, **characterized in that** the releasable connection means (30) are constituted by screws, clamps, grippers, or the like co-operating with the head plate (21) and each backing-plate (Pᵢ) of a given type.

6. Installation according to claim 2, **characterized in that** the backing-plate (P₁) of the clamp type co-operates with a flange (B₁) of the clamp type visa tightening means (S₁) constituted by an asymmetrical clamping collar enabling a tube (2) of one diameter to be connected to a filter housing (3) of a different diameter.
